# EUROPEAN PATENT SPECIFICATION

(11) **EP 3 113 940 B1**
(45) Date of publication and mention of the grant of the patent: **04.05.2022**
(21) Application number: 15715830.4
(22) Date of filing: 05.03.2015
(51) Int. Cl.: B29D 35/08, B29D 35/14

(54) **METHOD AND MOULD FOR PRODUCING FOOTWEAR**
VERFAHREN UND FORM ZUR HERSTELLUNG VON SCHUHWERK
PROCÉDÉ ET MOULE POUR LA FABRICATION DE CHAUSSURES

(30) Priority: 07.03.2014 IT TV20140036; 14.07.2014 IT TV20140102
(43) Date of publication of application: 11.01.2017
(73) Proprietor: Stemma SRL, 31041 Cornuda (TV) (IT)
(72) Inventor: PELLIZZARI, Stefano, 31044 Montebelluna (Treviso) (IT); BORDIN, Ettore, 31044 Montebelluna (Treviso) (IT)
(74) Representative: Marri, Luca
(86) International application number: PCT/IB2015/051615
(87) International publication number: WO 2015/132751

(56) References cited:
- WO-A1-2010/044046
- DE-A1- 1 903 720
- DE-A1- 3 113 295
- DE-A1- 3 319 946

## Description

The present invention relates to an innovative method for the production of shoes.

More particularly, the present invention relates to a method for the production of shoes by means of direct injection, onto the upper, of soles made of double-layer or multi-layer polymer material. Even more particularly, the present invention relates to a method for the production of shoes by means of direct injection, onto the upper, of soles made of double-layer or multi-layer polymer material, having a tread portion which is in direct contact with a part of the upper. Advantageously, said tread portion may be in direct contact with the front part of the upper, thus covering, at least partially, the toe of the shoe.

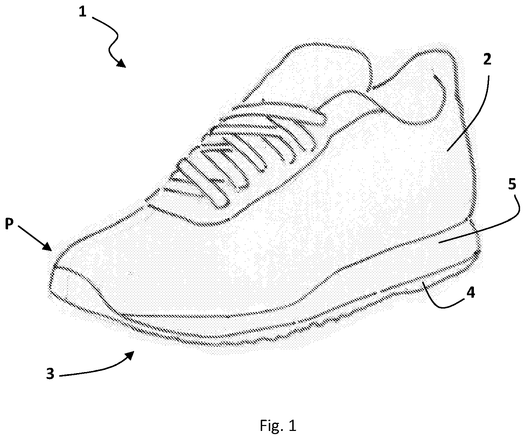

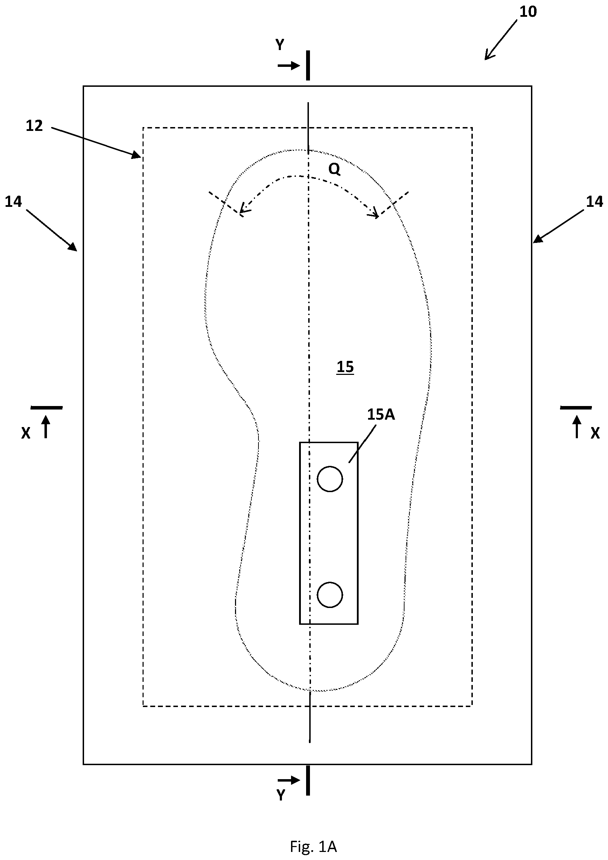

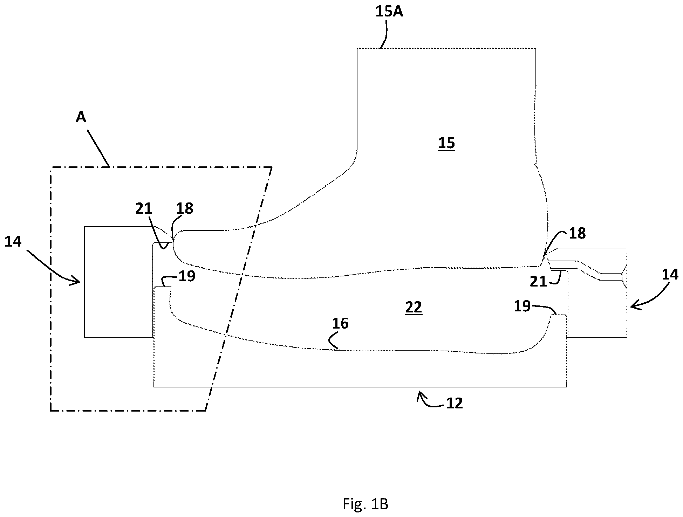

In the conventional process of direct injection onto an upper of this type of shoe, which is shown in schematic form in Figure 1, a mould composed of two side rings and two bases is generally used.

The two side rings are divided from each other along a longitudinal central plane and, in a known manner, are moved closer together so as to be able to come into contact with the form which is generally made of aluminium or polyethylene and on which the upper is mounted.

These rings, in combination with the form on which the upper is mounted, constitute the cover of the mould. Moreover the rings, together with the first base of the mould, define the volume of the midsole of the sole.

The second base of the mould, in turn, helps define the volume of the sole tread.

The known process envisages firstly a first mould closing step. During this step, the mould form, on which the upper has already mounted, is closed between the two side rings and then the first base is placed in contact, with its top edge, against the bottom surface of the two rings. In this way a first mould chamber having a form and dimensions the same as those of the midsole is defined.

The mould closing step is followed by a first injection step in which the material which forms the midsole is injected inside the first mould cavity.

Once the demoulding time for the injected mixture has lapsed, the first base of the mould is removed. The assembly composed of the form and the side rings is then combined with the second base of the mould so as to define a second mould cavity. This second cavity is delimited at the top by the material which has been previously injected and by part of the front portion of the upper, laterally by the two mould rings and at the bottom by the second mould base which is positioned so as to make contact with its top edge against the bottom edge of the rings.

This is followed by a second injection step during which the material which forms the tread of the sole is injected inside the second mould cavity.

Once the demoulding time for the second injected mixture has lapsed, the mould is opened and the shoe produced is removed from the mould form.

This production method, described above only briefly since well-known to the person skilled in the art, although widely used, is not without drawbacks. Document DE3319946 for example discloses such a known moulding method. Similar methods are also disclosed by documents DE 1903720 and DE 3113295.

Firstly, with such a production method, it is difficult to mould a tread with a small thickness, as for example required in the case of sports shoes.

Owing to the smaller thickness which is present in the zone where the tread must adhere directly to the upper and, in particular, in the region of the front portion, i.e. the portion close to the toe of the shoe, the injected material has difficulty filling completely the second mould cavity, with the result that a not insignificant number of production rejects occur.

Moreover, filling of the second mould cavity is hindered also by the high flow resistance encountered by the material injected in the zone where the tread must be fixed directly to the upper.

In this zone, in fact, the material flows in direct contact with the upper of the shoe. The upper is generally made of materials such as leather, fabric, imitation leather or the like, which have a coefficient of friction greater than the material of the midsole and the aluminium from which the rings and the bases of the mould are made.

Moreover, inevitably, during preparation of the upper which will then be mounted on the mould form, puckering occurs in the bottom edge zone of the upper and, in particular, in the toe zone. Said puckering cannot always be eliminated during the manufacturing operations which precede moulding of the sole and, therefore, once the upper has been mounted on the mould form, it reduces even more the passage available for the injected material, making correct filling of the second mould cavity even more difficult.

Furthermore, in order to facilitate extraction of the manufactured article produced from the mould it is known to use release agents, for example silicone, which are usually sprayed onto the first base of the mould and/or onto the second base of the mould.

In accordance with the above description, the first base of the mould is in contact with the bottom surface of the midsole onto which the tread must then adhere.

Part of the release agent sprayed onto the first base of the mould may therefore be deposited on the bottom surface of the midsole and prevent proper adhesion between the tread, which is injected subsequently, and the midsole. There is therefore the risk that the tread may become detached from the midsole.

The object of the present invention is therefore to solve the drawbacks of the prior art.

A first task of the present invention is to provide a method for the production of shoes by means of direct injection onto the upper of double-layer or multi-layer soles which have a tread with an extremely small thickness.

A second task of the present invention is to provide a method for the production of shoes by means of the direct injection, onto the upper, of double-layer or multi-layer soles which have specific aesthetic properties, without affecting bonding between the sole and upper and between the two or more layers which form the sole.

A further task of the present invention is to provide a method for the production of shoes by means of direct injection, onto the upper, of double-layer or multi-layer soles which allow the number of manufacturing rejects to be reduced in a simple manner and at a low cost.

Furthermore, a task of the present invention is to provide a method for the production of shoes by means of direct injection onto the upper of double-layer or multi-layer soles which may be easily implemented on an industrial scale.

Moreover, a task of the present invention is to provide a method for the production of shoes by means of direct injection onto the upper of double-layer or multi-layer soles, which may be implemented using an apparatus which is simplified compared to the prior art.

The object and main tasks described above are achieved with a method for the production of shoes by means of direct injection onto the upper of double-layer or multi-layer soles in accordance with that claimed in Claim 1.

The characteristic features and further advantages of the invention will emerge from the description, provided hereinbelow, of a number of examples of embodiment, provided by way of a non-limiting illustration, with reference to the attached drawings in which:
- Figure 1 shows in schematic form a perspective view of a shoe which can be obtained with the method according to the invention;
- Figure 1A shows a schematic top plan view of a mould which can be used with the method according to the invention;
- Figure 1B shows a schematic cross-sectional view of the mould shown in Figure 1A in a semi-open configuration along the plane indicated by Y-Y;
- Figure 2 shows a schematic cross-sectional view of the mould shown in Figure 1A in an open configuration and mounted in a generic mould-holder station, along the plane indicated by X-X;
- Figure 3 shows a view similar to that of Figure 2, but relating to a different embodiment of the mould and with the mould in a semi-open configuration;
- Figures 4-7 show in schematic form the steps of the production method according to the invention;
- Figure 8 shows in schematic form a side view of a shoe which can be obtained with the method according to the invention;
- Figure 9 shows a view, on a larger scale, of the detail according to Figure 1B indicated by A, with the mould in the closed configuration;
- Figure 10 shows a view, on a larger scale, of the detail of Figure 4 indicated by B;
- Figure 10A shows a view, on a larger scale, of the detail of Figure 10 indicated by D;
- Figure 10B shows a view similar to that of Figure 10A, but with the detail in a different operating configuration;
- Figure 11 shows a view, on a larger scale, of the detail of Figure 6 indicated by C;
- Figure 11A shows a view, on a larger scale, of the detail of Figure 11 indicated by E;
- Figures 12-14 show, respectively, views similar to those shown in Figures 9-11, but relating to a different embodiment of the mould;
- Figures 15-17 show, respectively, views similar to those shown in Figures 9-11, but relating to a first embodiment of the mould according to the invention;
- Figure 18 shows a view, on a larger scale, of the detail of Figure 15 indicated by F;
- Figures 19-21 show, respectively, views similar to those shown in Figures 15-17, but relating to another embodiment of the mould according to the invention;
- Figure 22 shows a view similar to that of Figure 2, in which the mould-holder station is not shown and the mould according to the invention is in a semi-open configuration;
- Figures 23-24 shows different steps in an innovative production method which can be used with the mould shown in Figure 22;
- Figures 25-27 show, respectively, views similar to those shown in Figures 22-24, but relating to a different embodiment of the mould according to the invention.

With reference to the attached figures, a method according to the invention for the production of a shoe 1 by means of direct injection, onto the upper, of a sole 3 made of polymer material is described. The sole 3 comprises a tread 4 and a midsole 5. As will become clear from the description below, this production method may be advantageously used with various mould types.

In particular, the method according to the invention allows the production, by means of direct injection of the midsole 5 onto the upper 2, of shoes 1 which have a tread 4 which covers directly a portion of the shoe upper and, preferably, at least partially a toe portion P of the shoe 1. Basically, as can be clearly seen for example in Figure 1, in said portion, the tread 4 is in direct contact with the upper 2. The upper 2 is preferably made of leather, fabric, imitation leather or similar materials.

In the attached figures, for the sake of easier illustration, reference will be made to a sole comprising a midsole 5 formed with a single layer. However, as will become clear from the description below, the innovative principles of the present invention may be advantageously applied also to soles 3 provided with double-layer or multi-layer midsoles 5.

The method according to the present invention is used for the production of a shoe 1 by means of direct injection, onto an upper 2, of a sole 3 made of polymer material comprising a midsole 5 and a tread 4 which covers a bottom surface of the midsole 5 and which, in at least one zone thereof, is in direct contact with the upper 2.

For easier description reference will be made to the toe portion P as being the portion of the shoe 1 with tread 4 which is in direct contact with the upper 2. However it is understood that any other zone (for example the sides or the heel zone) is suitable for application of the method, depending on the specific production, application and/or aesthetic requirements of the shoe 1.

The method comprises in particular the step of providing a mould cavity 22 which is designed to receive the part of the shoe 1 to be covered with the sole 3 (typically the sole part with possibly a raised perimetral edge) and comprising a base 12 having an impression 16 which is intended to form the outer surface of the tread 4. Preferably the impression 16 is delimited by a perimetral edge 19 of the base 12 (see Figure IB).

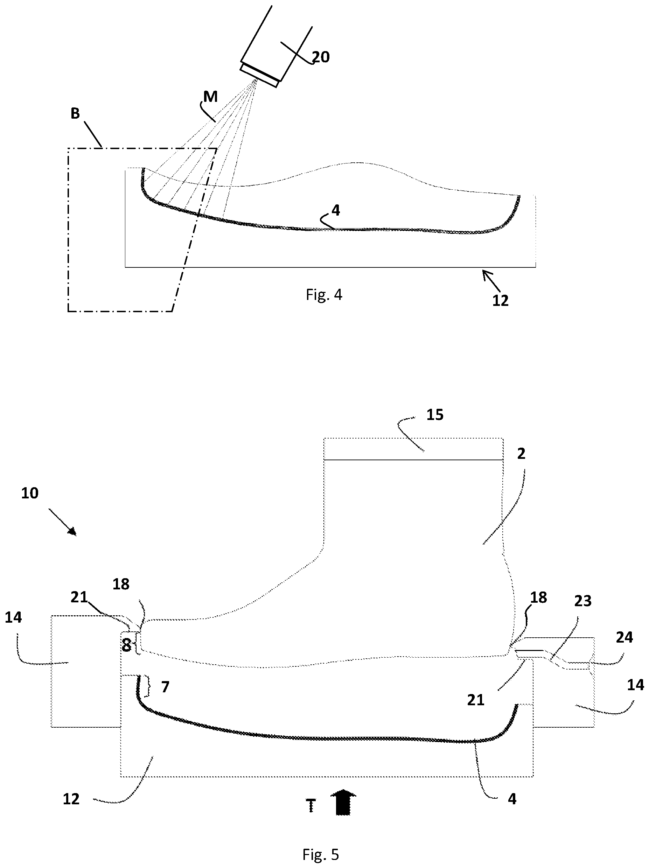

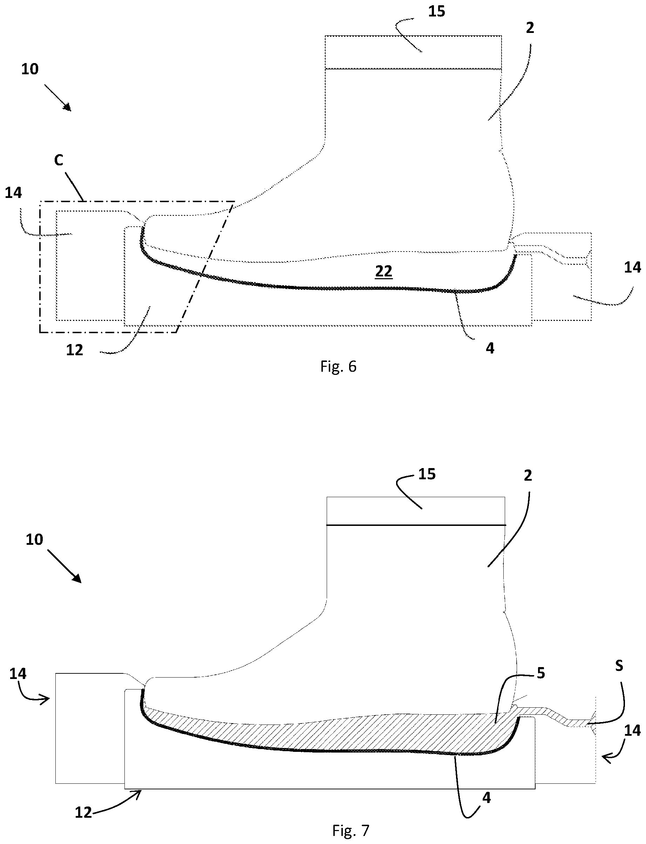

According to the method of the invention a first polymer mixture M is sprayed onto said impression 16 of the base 12 in order to form the tread 4 (see Figure 4). Them the mould cavity 22 is completely closed around the shoe 1 so that the tread 4 sprayed previously is situated correctly positioned relative to the upper 2 with the space for the midsole 5 and with the said tread zone 4 which is located in direct contact with the upper 2 (see Figures 5 and 6).

Finally, a second polymer mixture S is sprayed inside the mould cavity 22 so as to form the midsole 5 in the space left for the midsole (see Figure 7).

As can be clearly seen in Figures 1A, 2 and 3, in an advantageous embodiment of the method described above, the mould cavity 22 is formed by a mould 10 comprising the base 12, two side rings 14 divided along a central longitudinal plane Y, and a mould form 15. The upper 2 of the shoe 1 is mounted on the mould form 15.

As shown in Figure 4, the first polymer material M (advantageously a suitable polyurethane mixture) is sprayed, by means of a suitable spraying device 20 onto the impression 16 of the base 12, covering it entirely so as to form the tread 4 of the sole 3.

Thereafter, once the side rings 14 have been moved together, such that said side rings 14 rest with their closing edge 18 against the upper 2 mounted on the mould form 15, the perimetral edge 19 of the base 12 bears against a facing bottom surface 21 of the side rings 14 so as to obtain the mould cavity 22. The approach movement occurs in the direction of closing of the mould, namely the direction in which the mould cover (formed by form and rings) and the base are pushed against each other. This direction (indicated generically by T in the figures) generally is perpendicular to the surface or plane on/in which the base rests inside the press. In the figures this support plane is indicated by π.

For the purposes of the present invention, placing the perimetral edge 19 against the bottom surface 21 of the cover or the side rings 14 is understood as referring both to the configuration where the perimetral edge 19 comes into contact with the bottom surface 21 of the cover or the side rings 14 and the configuration where the perimetral edge 19 is close to the bottom surface 21 of cover or the side rings 14 in order to create the so-called burr plane t of the mould 10. As is well known, the moulding burr is created along the burr plane t of the mould, in particular in the case where polyurethane mixtures are used.

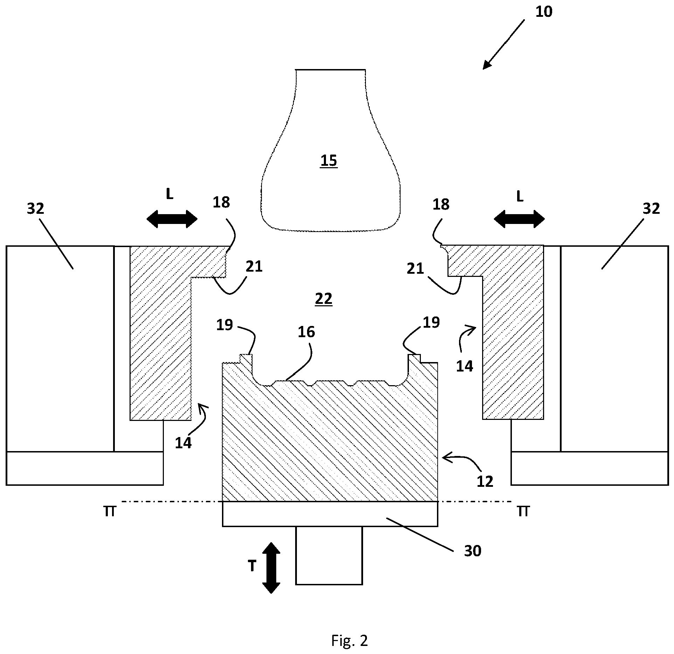

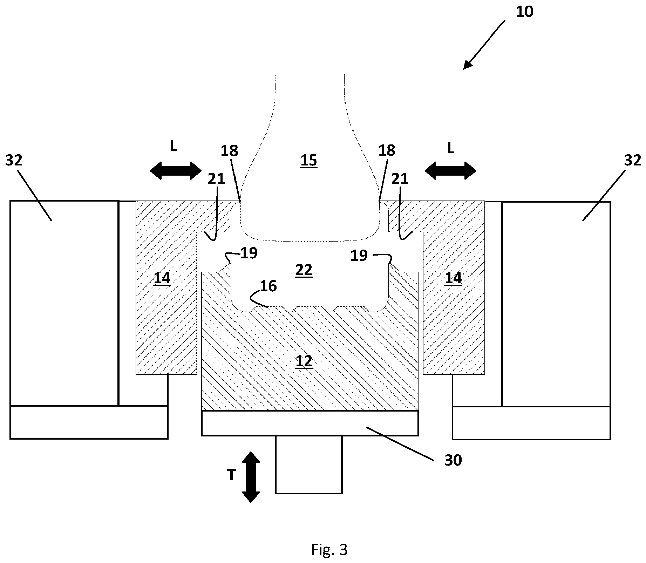

As will become clear from the description below, based on the polymer material which will be used for production of the tread 4 and the pattern itself of the tread 4, the perimetral edge 19 may be flat or inclined, so as to create a burr (see Fig. 2), or with a cutting edge (see Fig. 3) so as to avoid the accumulation of material in given portions of the perimetral edge. Alternatively, the perimetral edge may have a profile with a flat portion combined with a cutting-edge portion (partly so as to create the burr and partly so as to act as a cutting edge).

In accordance with the method according to the invention, a portion of the internal surface of the tread 4 formed previously by means of spraying is placed in contact with a corresponding portion of the upper 2. For example, the toe portion 7 of the internal surface of the tread 4 may be placed in direct contact with the toe portion 8 of the upper 2 (see Figure 5). The time which lapses between spraying and the moment where the tread 4 comes into contact with the upper 2 must obviously be sufficiently short to allow tread 4 to adhere firmly to the upper 2. The sprayed mixture, in order for it to adhere to the upper, must still be in a viscous state and therefore the demoulding must not have lapsed.

It is then possible to inject the second polymer mixture S (advantageously a polyurethane mixture) inside the mould cavity 22 so as to form the midsole 5 of the sole 3.

After the appropriate demoulding time, the mould 10 may be opened in order to remove from the mould form 15 the shoe 1 produced.

With reference to Figure 4, as mentioned, one step of the method envisages spraying a first polymer mixture M onto the impression 16 of the base 12.

In the context of the present description, spraying refers to the propelling of atomized liquid mixtures. Basically, the microparticles of the polymer mixture M are conveyed inside an air stream.

The spraying step is carried out so that the impression 16 is preferably completely covered.

Depending on the thicknesses of the tread which must be obtained, the mixture may M may be sprayed so as to cover the impression 16 with a single layer of material or, alternatively, the mixture M may be sprayed so as to cover the impression 15 with more than one layer of material.

Advantageously with the method according to the present invention a tread 4 with a thickness of between 0.2 and 5 mm, preferably between 1 and 3 mm, may be formed. Using the known production methods the formation of the tread with such small thicknesses is very prone to defects.

Preferably the first mixture M will be sprayed onto the impression 16 while keeping the flowrate at a value of preferably between 0.5 and 25 grammes per second.

Preferably, the mixture M will be sprayed onto the impression 16 using a spraying device 20 which has a small play between the mixing screw and the internal walls of the mixing chamber where the base components of the mixture M (for example, polyol and isocyanate and any additives, if the mixture M is a polyurethane mixture) are mixed together. Said play is preferably constant and has a value of less than 1 millimetre.

Moreover, the mixing screw of the spraying device 20 preferably is rotated at a speed of rotation of between 8000 and 30,000 rpm.

A spraying device with these technical characteristics is described in European Patent 2346614.

By means of this spraying device it is possible to spray the mixture M with a high degree of precision so that it duplicates perfectly the finish of the impression 16, even in the presence of a tread pattern which has marked reliefs and cavities (for example as in the case of a "tank" sole design).

Moreover, by means of the spraying method (and in particular with the spraying device mentioned) it is possible to obtain a tread 4 which is substantially free of defects, such as air bubbles or cavities, which can be generally found during the known casting or injection moulding methods.

Advantageously, the mixture sprayed into the impression of the base 12 is not compressed by means of an intermediate cover. In this way, the sprayed mixture does not come into contact with any release agents which might be present on this cover.

Moreover, in the known moulding processes, following compression of the mixture with an intermediate cover, where present, a kind of film forms on the surface separating the mixture and cover.

The presence of this film reduces significantly the capacity for bonding between components made of polyurethane materials and in particular polyether-based materials.

The method according to the present invention, owing to the particular feature of envisaging a step of spraying the mixture M and of not having a step for compression of the sprayed mixture in the impression 16 for forming the tread 4, may therefore be advantageously used also to provide dual-component soles in which both the tread 4 and the midsole 5 are produced with polyester-based or polyether-based polyurethane mixtures M and S.

As mentioned, the base 12 of the mould 10 is placed in contact with the cover 14 so as to create a mould cavity 22 and ensure that, for example, the toe portion 7 of the internal surface of the tread 4 is placed in direct contact with the toe portion 8 of the upper 2. Basically in this toe zone the tread 4 is directly joined to the upper 2 without the midsole 5 in between.

It should be noted therefore how, in the case of smaller thicknesses of the tread 4, the defects mentioned with reference to the prior art are not encountered.

There are in fact no mould filling problems since the tread 4 is made by means of a spraying process performed with the mould open. Moreover, the adhesion of the tread 4 to the toe of the upper 2 is not adversely affected by the presence of any puckering. Said puckering, once the tread 4 is brought into contact with the upper 2, will be embedded in the material forming the tread itself.

As schematically shown in Figure 5, the second mixture S is advantageously injected inside the mould cavity 22 through an injection duct 23 provided in the region of the cover 14, preferably on a contact surface between the two side rings.

This injection duct 23 is preferably provided with an injection hole 24 intended to be closed once the step for injection of the second mixture S has been completed.

It should be noted how the second mixture S which is injected manages easily to fill the mould cavity 22 also in the portion (for example front portion) of the shoe where the volume available for the injection material is small (see Figure 6).

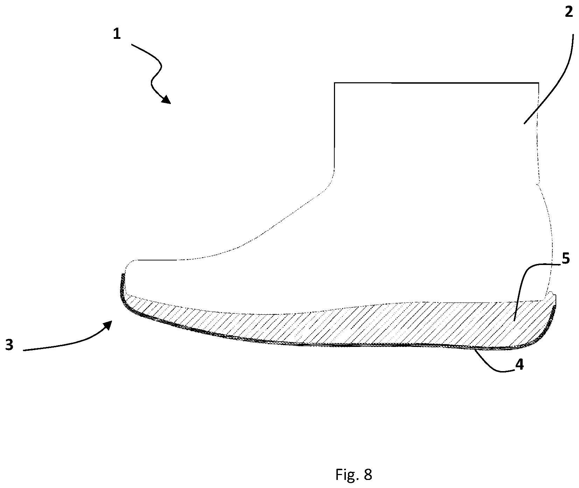

Once the step for injection of the second mixture S has been completed and once the demoulding time for the injected material has lapsed, the mould may be opened and the sole may be trimmed in the known manner in order to obtain the shoe 1 (see Figure 8).

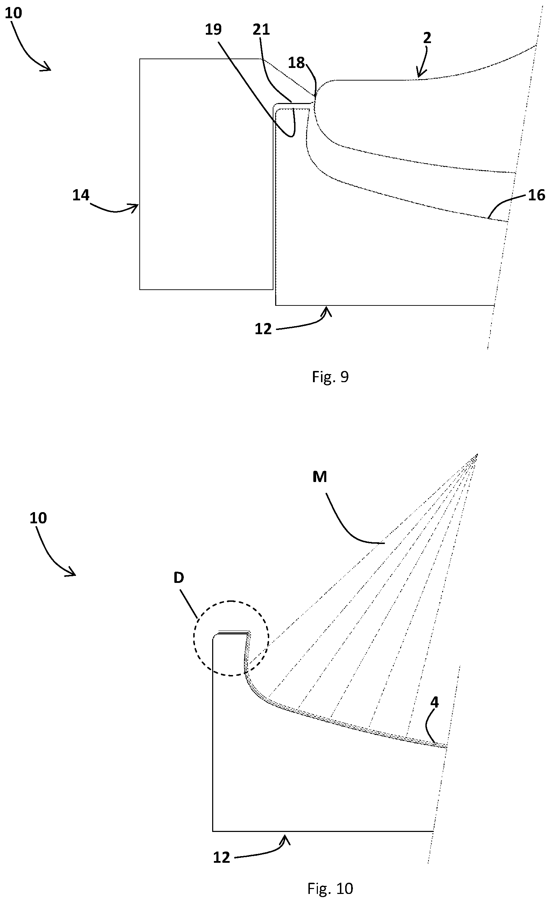

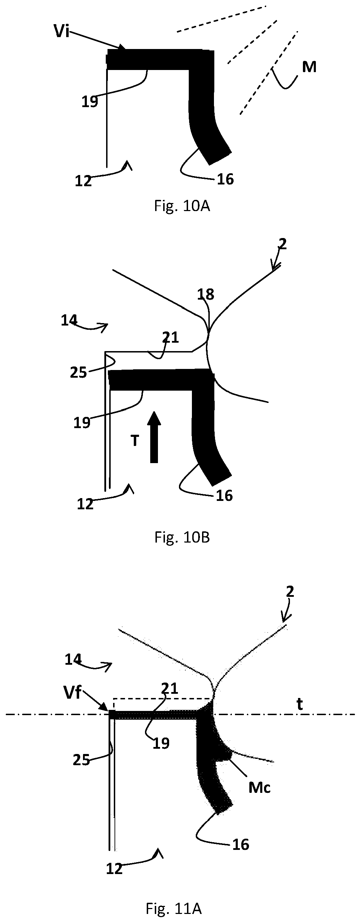

In accordance with an embodiment of the invention, the method envisages moreover a step for spraying the polymer mixture M along at least one part of the perimetral edge 19 which delimits the impression 16 of the base 12. In this way an initial volume Vi of polymer mixture M is deposited along this part of the perimetral edge 19 (see Figure 10A).

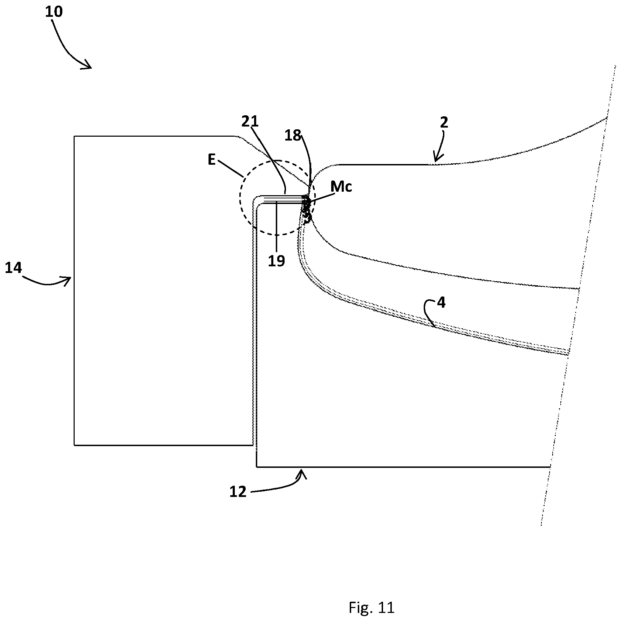

According to the invention, advantageously, during the mould closing step, the perimetral edge 19 is arranged next to the bottom facing surface 21 of the cover 14 so as to define the burr plane t and obtain, at least in predetermined zones of the burr plane t, a final volume Vf of polymer mixture M smaller than the volume Vi initially deposited by means of spraying (see Figures 10B and 11A).

Basically, the initial volume Vi depends on the thickness of the layer of the sprayed polymer mixture M, multiplied by the dimension of the part of the perimetral edge 19 covered by the polymer mixture M. The final volume Vf corresponds substantially to the thickness of the moulding burr multiplied by the portion of the perimetral edge 19 covered by the burr.

In Figure 11A the volume Vi initially deposited along the perimetral edge 19 is indicated by a broken line, so as to highlight the difference between the initial volume Vi and the final volume Vf of the polymer mixture M present in said zones of the perimetral edge 19.

This has been found to be advantageous in order to obtain a better adhesion and sealing of the edge of the tread 4 on the upper 2.

In fact, following closure of the mould 10, the polymer material M sprayed onto the perimetral edge 19 is compressed between the perimetral edge 19 and the facing surface 21 of the cover 14, i.e. in the space where the moulding burr is formed.

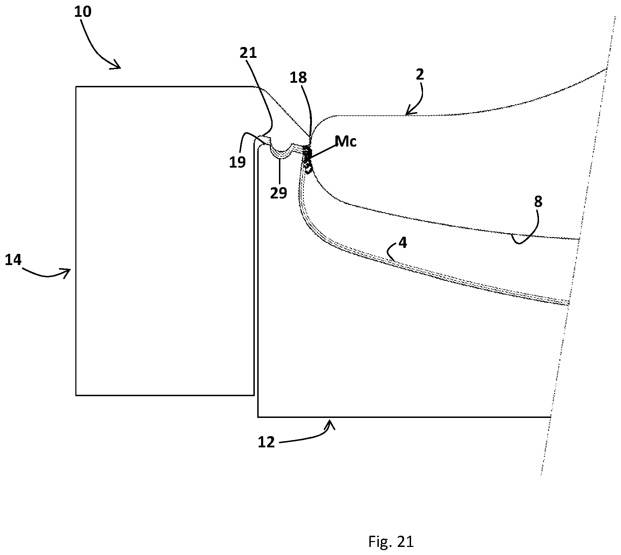

Following this compression, the material sprayed on these zones of the burr plane is caused to flow towards the mould cavity and therefore towards the upper 2 so as to form a compressed sealing zone Mc (see Figures 11, 11A, 14, 17, 21).

This sealing zone Mc on the one hand ensures that, in the desired zones, the tread 4 adheres to the upper 2 and at the same time prevents the polymer mixture S injected subsequently from being able to come out the mould cavity 22.

The zones of the burr plane t in which there is a reduction in the volume of the mixture M initially sprayed along the perimetral edge 19 are therefore close to the portion of the impression 16 which is intended to form the tread 4 placed in direct contact with the upper 2.

The preferable difference in volume may be calculated depending on the extent of the desired sealing zone Mc and any thickness of the moulding burr which is to be obtained.

Essentially, the mould is advantageously provided (in at least a predetermined zone of the portion of the perimetral edge 19 which defines the burr plane) with an area for accumulating the polymer mixture which is sprayed onto the perimetral edge 19. This accumulation area is approached by the bottom surface 21 of the cover so as to compress the mixture in the accumulation zone when the mould is closed, so as to push towards the mould cavity at least part of the polymer material which is present in the accumulation zone.

Differently from that shown for example in Figure 10A, spraying of the polymer mixture M along the perimetral edge 19 could leave zones of the perimetral edge 19, in particular those arranged towards the periphery, not completely covered by the polymer mixture M.

In any case, even in such a situation, the method according to the invention proves to be effective for ensuring that a sealing zone Mc is formed in the vicinity of the portion of the tread 4 in direct contact with the upper 2.

In fact, if there is a peripheral zone of the perimetral edge not initially covered by the mixture M, upon compression the sprayed mixture M will first flow towards the empty space in this peripheral zone of the perimetral edge 19 until it encounters the side wall 25 of the cover 14 (in particular the side rings) which closes the burr space externally. Thereafter, the mixture M is mainly pushed towards the cavity of the mould and against the upper. This is schematically shown in Figure 11A. Even if empty spaces are present, flowing of the material towards the outside is therefore quickly blocked and the remainder of the material in the burr plane is in any case pushed towards the mould cavity. Obviously, the ratio between initial volume and final volume must take account of the empty spaces, in order to ensure that sufficient material is pushed towards the mould cavity, and therefore, towards the upper.

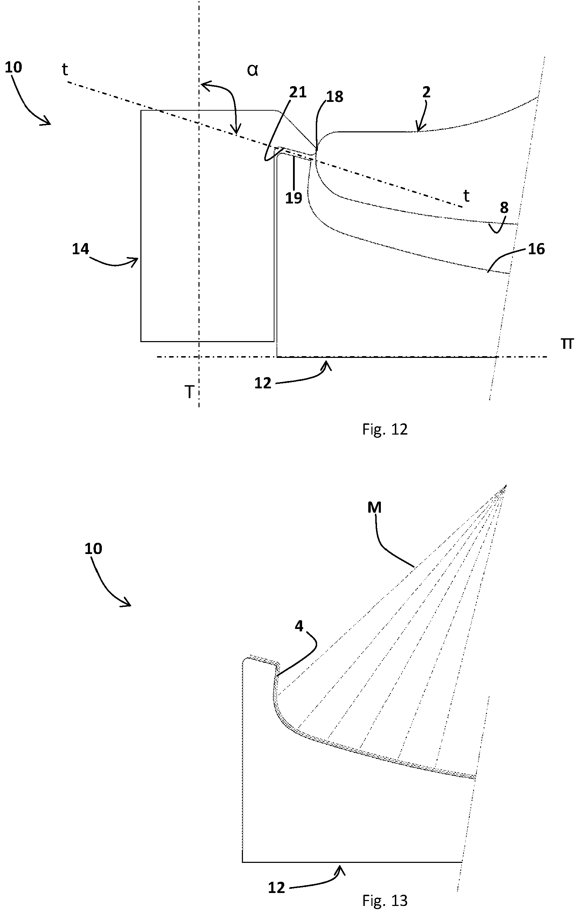

As can be clearly seen in Figures 12-14, in order to improve further the sealing effect, avoiding at the same time undesirable irregular beads on the visible edge of the tread 4 against the upper 2, it has been found to be advantageous to design the burr plane t, at least in the zones which are to be better sealed, inclined (at least in the part adjacent to the mould cavity) towards the bottom of the mould cavity 22.

In other words, the inclination of the burr plane t may form an obtuse angle α with the mould closing direction T. The angle α may be advantageously between 95° and 150°.

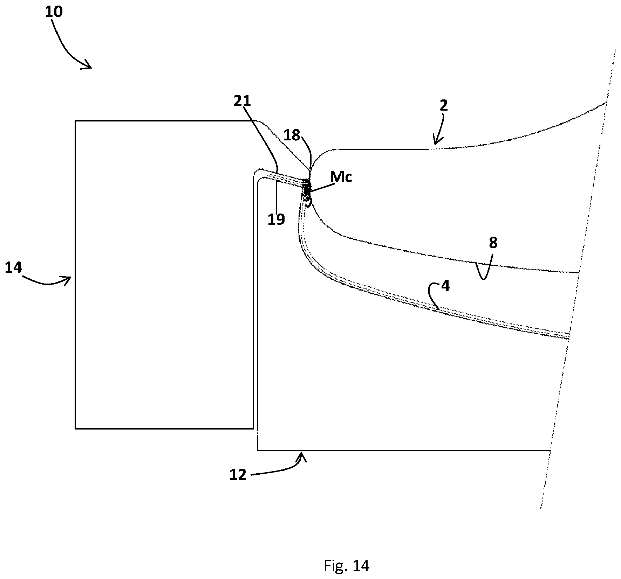

The polymer mixture M is thus mainly pushed from the burr space, namely the space situated between the perimetral edge 19 of the base 12 and the facing surface 21 of the cover 14, towards the cavity of the mould along a direction which is directed towards the bottom of the tread, as shown schematically in Figure 14.

The provision of an inclined burr plane t ensures that the mixture sprayed onto the perimetral edge 19 flows, before being compressed between base and cover, towards the mould cavity 22 so as to ensure even in the case where a small quantity of mixture has been sprayed onto the perimetral edge 19, a correct adhesion between tread 4 and upper 2.

In other words, the inclined burr plane t is able to convey towards the upper 2 almost all the polymer mixture M sprayed onto the perimetral edge 19.

A further advantageous improvement in the sealing may envisage the formation of a greater amount of reserve material in the burr space, namely in the accumulation area.

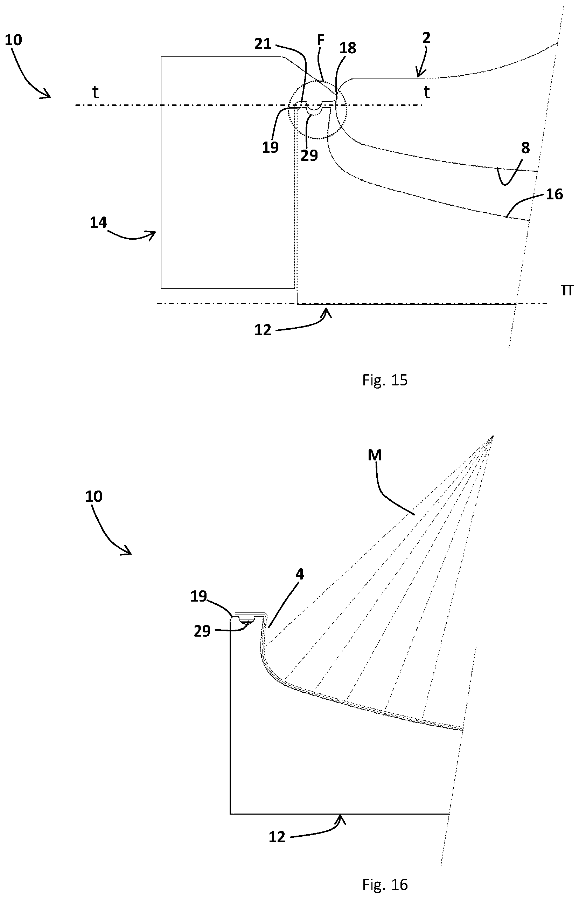

Advantageously, as shown in Figure 15, this reserve amount may be formed by providing a mixture receiving concavity 29 in the perimetral edge 19 of the base 12 (see Figure 16). In this way, during spraying of the perimetral edge 19, the polymer mixture M may accumulate inside the concavity 29.

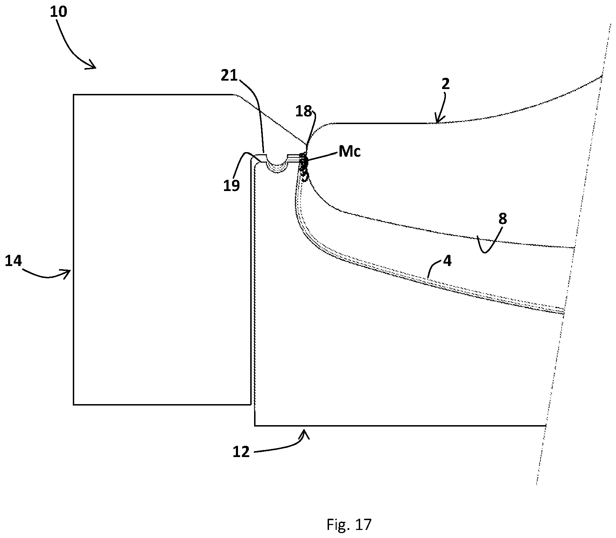

The facing closing surface 21 of the cover 14 may also be provided with a corresponding convexity 31 intended to penetrate into the concavity 29 in order to reduce the volume of the reserve material and push this reserve towards the cavity in the mould, as schematically shown in Figure 17.

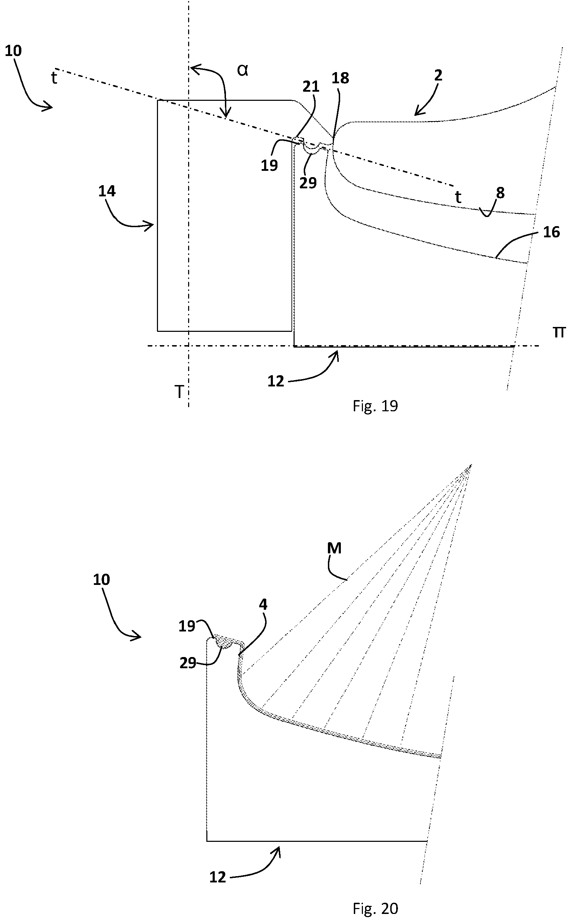

An inclined burr plane t may also be provided, at least in the part of the burr plane t next to the mould cavity (namely between the concavity 29 and the mould cavity), so as to push the material towards the base of the tread as in the preceding embodiment, as schematically shown in Figures 19 to 21.

Advantageously, the spraying of polymer mixture M onto the perimetral edge 19, also in the zones which are not close to the portion of the tread which must be directly fixed to the upper, also ensures that the polymer mixture S cannot infiltrate underneath the sprayed polymer mixture for forming the tread 4.

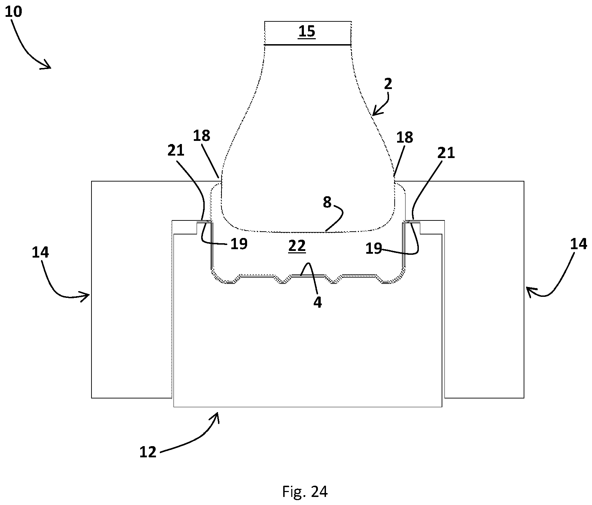

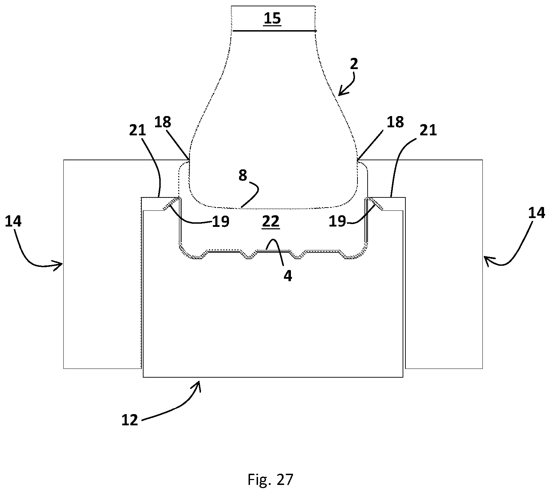

With specific reference to Figures 15 to 27, a mould 10 advantageously designed to be used with the method described above will now be described. In particular, this mould 10 allows a reserve of polymer material M to be formed along the perimetral edge 19 during the spraying step.

The mould 10, in the closed configuration, comprises:
- a mould form 15 on which the upper 2 is intended to be mounted;
- a cover 14 resting with a closing edge 18 on the upper 2 mounted on the mould form 15;
- a base 12 with an impression 16, for forming the outer surface of the tread 4, which is delimited by a perimetral edge 19 adjacent to a bottom surface 21 of the cover 14, so as to obtain a mould cavity 22 designed to receive the shoe part 1 which must be covered by the sole 3.

In accordance with the present disclosure the mould 10 is characterized in that an area for accumulating the polymer mixture sprayed on the perimetral edge is provided in at least one predetermined zone of the portion of the perimetral edge 19 which defines the burr plane t. Advantageously, the accumulation area has a receiving concavity 29 for the polymer mixture M sprayed along the perimetral edge 19.

The receiving concavity 29 is preferably provided on the perimetral edge 19 close to the portion of the impression 16 intended to form the part of the tread 4 which is placed in direct contract with the upper 2.

In this way part of the polymer mixture M collected inside the concavity 29 may be pushed, during closing of the mould 10, towards the upper 2, facilitating bonding of the tread 4 to said upper.

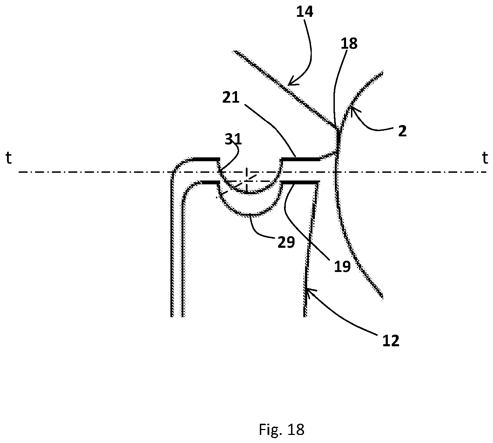

As shown in detail in Figure 18, advantageously a corresponding convexity 31 intended to penetrate into the concavity 29 is provided on the bottom surface 21 of the cover 14 facing the concavity 29.

In this way it is ensured that practically all the material collected inside the concavity 29 may be compressed, during closure of the mould 10, facilitating flowing of at least part thereof towards the mould cavity 22.

In the attached figures, the concavity 29 and the convexity 31 have a cross-section with a rounded and, preferably, semi-circular profile. Such a form has been found to be advantageous for ensuring an easy flow of the material towards the outside of the cavity. Obviously the concavity 29 and convexity 31 with transverse profiles having different forms may be respectively provided on the perimetral edge 19 and the surface 21 in order to satisfy specific requirements.

The concavity 29 preferably extends along the entire portion of the perimetral edge 19 intended to form the compressed sealing zone Mc. Alternatively, two or more concavities, which are spaced from each other and have a for example semi-spherical form, may be provided along the portion of the perimetral edge 19 intended to form the compressed sealing zone Mc.

As described above, when the mould 10 is closed, the perimetral edge 19 and the facing surface 21 of the cover 14 define a burr plane t.

This burr plane t, at least in the portion close to the cavity of the mould (preferably the zone of the perimetral edge 19 situated between the concavity 29 and the impression of the base 12) may be inclined towards the bottom of the mould cavity 22 so as to direct the compressed material downwards.

As schematically shown in Figures 19 to 21, this portion of the burr plane t may form with the mould closing direction T an angle α of between 95° and 150°.

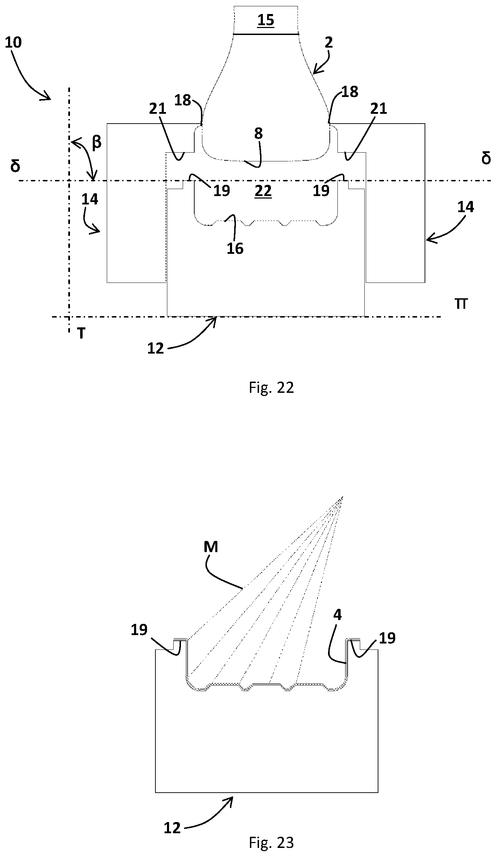

As can be clearly seen in Figures 22 to 24, along the portion of the impression 16 intended to form the portion of the tread 4 placed in direct contact with the midsole 5, i.e. the portion of the tread 4 which is not in direct contact with the upper, the perimetral edge 19 may define a closing plane δ substantially perpendicular to the mould closing direction T.

The moulding burr, which must then be trimmed, will also be formed along the closing plane δ. In this embodiment, therefore, a substantially flat burr will be obtained in the zones of the tread not in contact with the upper, such as the sides or heel of the shoe.

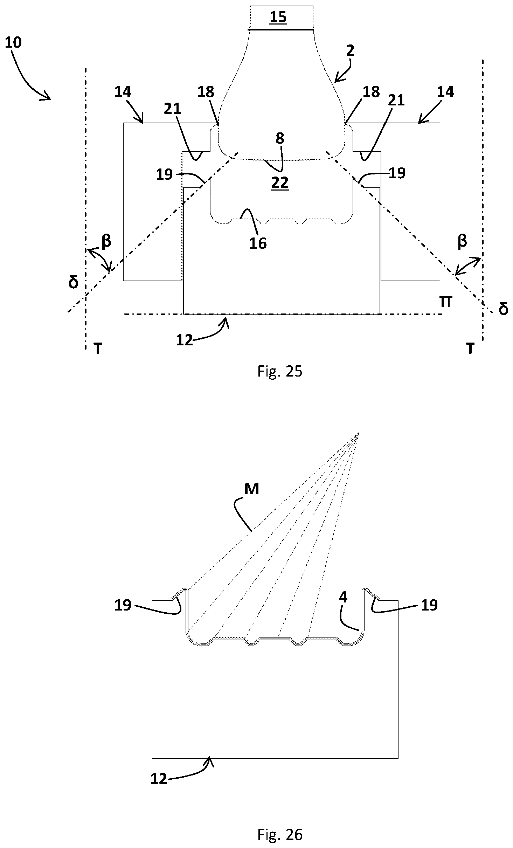

According to an alternative embodiment, shown in Figures 25 to 27, the perimetral edge 19 defines a mould closing plane δ which forms an angle β of between 5° and 60° with the mould closing direction T along the portion of the impression 16 intended to form the portion of the tread 4 placed in direct contact with the midsole 5.

In this embodiment, not part of the claimed invention, the perimetral edge has a cutting-edge profile which has the function of preventing an excessive quantity of polymer mixture M from being able to accumulate along this perimetral edge portion.

In fact, should there be an excessive amount of material along this portion of the perimetral edge, following closing of the mould and subsequent compression of base and rings, part of this material could flow towards the portion of the mould which should be occupied by the midsole, this ruining the appearance of the shoe.

According to an alternative embodiment, not part of the claimed invention, not shown in the attached figures, the perimetral edge 19, in these zones, has a profile with a flat portion combined with a cutting-edge portion.

In a known manner, as for example shown in Figures 2 and 3, the mould 10 may be mounted in a mould-holder station of a static or rotating moulding machine comprising a plurality of mould-holder stations. The mould-holder station in a known manner comprises a base 30 and a mould-holder compartment 32.

The base 12 of the mould 10 is mounted opposite the base 30 of the mould-holder station. By means of actuator means arranged in the base 30 of the mould-holder station, the base 12 may be moved along the mould closing direction T.

Advantageously, the base 12 may comprise fixing means suitable for mounting decorative inserts on the impression 16. These decorative inserts may be made for example of polymer materials such as rubber, TPU or the like. These inserts, in addition to having an aesthetic function, may increase the abrasion-resistance and the adherence of the tread 4 to the ground.

Any inserts will be advantageously inserted in the base 12 before spraying the first polymer mixture M.

Advantageously, as shown in the attached figures, the cover of the mould 10 may be composed of two side rings 14 which are divided along a longitudinal central plane and intended to be moved towards and away from each other.

The side rings 14 may be fixed to the mould-holder compartment 32 of the station (see Figures 2 and 3). The side rings 14 are divided from each other along a longitudinal central plane and, in a known manner, may be moved towards and away from each other by means of special actuators arranged in the mould-holder compartment 32. The direction of movement of the rings 14 is indicated in Figures 2 and 3 by the arrows L.

The mould form 15 is shaped according to the form of the shoe which is to be obtained and, in a known manner, preferably has quick-fitting and release means 15A designed to facilitate assembly of the upper 2 thereon.

In a known manner, the mould 10 may be advantageously provided with two identical mould forms mounted on a rotatable form holder (not shown in the attached figures).

From the above it is clear how with the method according to the invention it is possible to solve the problems described above with reference to the prior art.

In particular, by means of a method according to the invention it will be possible to obtain shoes with extremely small tread thickness, in particular also in the region of the toe portion of the shoe. These shoes are widely used for sports applications.

Moreover, the method according to the invention advantageously may be implemented using simple equipment since the mould 10 may comprise a single base. In the known methods instead it is necessary to provide a mould with two different bases for the midsole and the tread. As a result, costs may be reduced and the moulding operations may also be simplified.

Furthermore, with the method according to the invention it is possible to reduce the manufacturing rejects since the number of rejects in percentage terms resulting from incorrect filling of the mould cavity is significantly reduced.

Advantageously, by using several bases to mould the midsole, it is possible to produce a multiple-layer midsole.

Moreover, as a result of spraying the material forming the tread, correct bonding between tread layers and midsole is always ensured.

Furthermore, by spraying the polymer mixture onto the perimetral edge of the base, correct sealing of the tread on the upper is always ensured.

Finally, with the mould according to the present disclosure, advantageously the steps of the method described above may be optimized.

The person skilled in the art, in order to satisfy specific requirements, may make modifications to the embodiments described above and/or replace the parts described with equivalent parts, without thereby departing from the scope of the accompanying claims.

## Claims

1. Method for the production of a shoe (1) by means of direct injection, onto the upper (2), of a sole (3) made of polymer material comprising a midsole (5) and a tread (4) which covers a bottom surface of the midsole (5) and which, in at least one zone thereof, is in direct contact with the upper (2),
the method comprising the steps of:
- providing a mould cavity (22), designed to receive the shoe part (1) to be covered with the sole (3) and comprising a base (12) having an impression (16) intended to form the outer surface of the tread (4);
- spraying a first polymer mixture (M) onto said impression (16) of the base (12) so as to form the tread (4);
- closing the mould cavity (22) around the shoe (1) so that the base (12) with the tread (4) sprayed previously is positioned relative to the upper (2) with the space for the midsole (5) and with the said zone of the tread (4) placed in direct contact with the upper (2);
- injecting a second polymer mixture (S) inside said mould cavity (22) after closing with the base (12), so as to form the midsole (5) inside the said space for the midsole.

2. Method according to Claim 1, **characterized in that** the said at least one tread zone (4) in direct contact with the upper (2) is in a toe portion (P) of the shoe (1).

3. Method according to Claim 1, **characterized in that** the first polymer mixture (M) and/or the second polymer ' mixture (S) are polyurethane mixtures.

4. Method according to Claim 1, **characterized in that** the mould cavity (22) is formed by a mould (10) comprising the said base (12), two side rings (14), divided along a longitudinal central plane, and a mould form (15), and **in that**, in order to close the mould cavity (22), the following steps are performed:
- moving the side rings (14) towards each other such that said side rings (14) rest with their closing edge (18) on the sides of the upper (2) mounted on the mould form (15);
- and, after spraying the first polymer mixture (M), placing the base (12) with its perimetral edge (19), which delimits the impression (16), against a bottom surface (21) of the side rings (14), so as to obtain the mould cavity (22) with the said zone of the tread (4) placed in direct contact with the upper (2).

5. Method according to Claim 1, **characterized in that** the base (12) of the mould (10) has a perimetral edge (19) which delimits the impression (16) and **in that** the first polymer mixture (M) is sprayed over at least part of the perimetral edge (19) of the base (12) so as to deposit there an initial volume (Vi) of the first polymer mixture (M).

6. Method according to Claim 5, **characterized in that**, during the step for closing the mould cavity (22), the perimetral edge (19) of the base (12) is placed adjacent to a facing bottom surface (21) of the cover (14), so as to define a burr plane (t) and obtain, when the mould cavity (22) is closed, in predetermined zones of the burr plane (t), a final volume (Vf) of polymer mixture (M) smaller than the initial volume (Vi) of polymer mixture (M) deposited during the spraying step, so as to push at least part of the polymer mixture (M) on the burr plane (t) towards the mould cavity (22).

7. Method according to Claim 6, **characterized in that** said predetermined zones of the burr plane (t) are close to a portion of the impression (16) of the base (12) intended to form the portion of the tread (4) placed in direct contact with the upper (2).

8. Method according to Claim 6, **characterized in that** the movement towards each other of the perimetral edge (19) of the base (12) and the facing bottom surface (21) of cover (14) in order to define the burr plane (t) takes place along a mould closing direction (T); said mould closing direction (T) being the direction along which the base (12) and the cover (14) are pushed against each other.

9. Method according to Claim 6, **characterized in that** at least one portion of the burr plane (t), in said predetermined zones, is inclined towards the bottom of the mould cavity (22).

10. Method according to Claim 9, **characterized in that** said portion of the burr plane (t) forms with the mould closing direction (T) an angle (a) of between 95° and 150°.

11. Method according to Claim 6, **characterized in that**, during the step of spraying the first polymer mixture (M), along at least one section of the perimetral edge (19) of the base (12) intended to define said predetermined zones of the burr plane (t), a greater initial volume (Vi) of polymer mixture (M) is obtained by means of the provision of a mixture receiving concavity (29).

12. Method according to Claim 11, **characterized in that**, during the mould closing step, the compression of the polymer mixture (M) deposited inside the mixture receiving concavity (29) is performed by means of the provision of a convexity (31) in the facing bottom surface (21) of the cover (14); said convexity (31) being designed to penetrate into the mixture receiving concavity (29).

13. Method according to Claim 11, **characterized in that** at least the portion of the burr plane (t) situated between the mixture receiving concavity (29) and the impression (16) of the base (12) is inclined towards the bottom of the mould cavity (22).

## Patentansprüche

1. Verfahren zur Herstellung eines Schuhs (1) durch direktes Spritzen, auf das Oberteil (2), einer Sohle (3), die aus Polymermaterial gefertigt ist und eine Zwischensohle (5) und eine Lauffläche (4) umfasst, die eine Unterseite der Zwischensohle (5) bedeckt und die zumindest in einem Bereich in direktem Kontakt mit dem Oberteil (2) ist,
wobei das Verfahren die Schritte umfasst:
- Bereitstellen eines Formhohlraums (22), der dazu ausgebildet ist, das mit der Sohle (3) zu bedeckende Schuhteil (1) aufzunehmen, und der ein Grundteil (12) mit einem Eindruck (16) umfasst, der dazu bestimmt ist, die äußere Oberfläche der Lauffläche (4) zu bilden;
- Sprühen einer ersten Polymermischung (M) auf den Eindruck (16) des Grundteils (12) um die Lauffläche (4) zu bilden;
- Schließen des Formhohlraums (22) um den Schuh (1), so dass das Grundteil (12) mit der zuvor aufgespritzten Lauffläche (4) relativ zum Oberteil (2) mit dem Raum für die Zwischensohle (5) angeordnet wird, und wobei der besagte Bereich der Lauffläche (4) in direktem Kontakt mit dem Oberteil (2) angeordnet wird;
- Einspritzen einer zweiten Polymermischung (S) in den Formhohlraum (22) nach dem Schließen mit dem Grundteil (12), um die Zwischensohle (5) innerhalb des Raums für die Zwischensohle zu bilden.

2. Verfahren nach Anspruch 1, **dadurch gekennzeichnet, dass** sich der besagte mindestens eine Laufflächenbereich (4), der direkt mit dem Oberteil (2) in Kontakt ist, in einem Zehenabschnitt (P) des Schuhs (1) befindet.

3. Verfahren nach Anspruch 1, **dadurch gekennzeichnet, dass** die erste Polymermischung (M) und/oder die zweite Polymermischung (S) Polyurethanmischungen sind.

4. Verfahren nach Anspruch 1, **dadurch gekennzeichnet, dass** der Formhohlraum (22) durch eine Form (10) gebildet ist, die das Grundteil (12), zwei entlang einer Längsmittelebene geteilte Seitenringe (14) und eine Formgestalt (15) umfasst, und dass zum Schließen des Formhohlraums (22) folgende Schritte durchgeführt werden:
- Aufeinanderzubewegen der Seitenringe (14), so dass die Seitenringe (14) mit ihrer Schließkante (18) auf den Seiten des auf der Formgestalt (15) angebrachten Oberteils (2) aufliegen;
- und, nach dem Aufsprühen der ersten Polymermischung (M), Anordnen des Grundteils (12) mit seinem umlaufenden Rand (19), der den Eindruck (16) begrenzt, gegen eine Bodenfläche (21) der Seitenringe (14), um den Formhohlraum (22) zu erhalten, wobei der besagte Bereich der Lauffläche (4) in direktem Kontakt mit dem Oberteil (2) angeordnet wird.

5. Verfahren nach Anspruch 1, **dadurch gekennzeichnet, dass** das Grundteil (12) der Form (10) einen umlaufenden Rand (19) aufweist, der den Eindruck (16) begrenzt, und dass die erste Polymermischung (M) über zumindest einen Teil des umlaufenden Rands (19) des Grundteils (12) gesprüht wird, um dort ein Ausgangsvolumen (Vi) der ersten Polymermischung (M) aufzubringen.

6. Verfahren nach Anspruch 5, **dadurch gekennzeichnet, dass** während des Schritts zum Schließen des Formhohlraums (22) der umlaufende Rand (19) des Grundteils (12) angrenzend an eine zugewandte Bodenfläche (21) der Abdeckung (14) angeordnet wird, um eine Gratebene (t) zu definieren und bei geschlossenem Formhohlraum (22) in vorab festgelegten Bereichen der Gratebene (t) ein Endvolumen (Vf) der Polymermischung (M) zu erhalten, das kleiner als das Ausgangsvolumen (Vi) der Polymermischung (M) ist, die während des Sprühschritts aufgebracht wird, um zumindest einen Teil der Polymermischung (M) auf der Gratebene (t) in Richtung des Formhohlraums (22) zu drücken.

7. Verfahren nach Anspruch 6, **dadurch gekennzeichnet, dass** die vorab festgelegten Bereiche der Gratebene (t) in der Nähe eines Abschnitts des Eindrucks (16) des Grundteils (12) liegen, der dazu bestimmt ist, den Abschnitt der Lauffläche (4) zu bilden, der in direktem Kontakt mit dem Oberteil (2) angeordnet ist.

8. Verfahren nach Anspruch 6, **dadurch gekennzeichnet, dass** das Aufeinanderzubewegen des umlaufenden Rands (19) des Grundteils (12) und der zugewandten Bodenfläche (21) der Abdeckung (14) zum Definieren der Gratebene (t) entlang einer Formschließrichtung (T) stattfindet; wobei die Formschließrichtung (T) die Richtung ist, entlang der das Grundteil (12) und die Abdeckung (14) gegeneinander gedrückt werden.

9. Verfahren nach Anspruch 6, **dadurch gekennzeichnet, dass** zumindest ein Abschnitt der Gratebene (t) in den vorab festgelegten Bereichen zum Boden des Formhohlraums (22) hin geneigt ist.

10. Verfahren nach Anspruch 9, **dadurch gekennzeichnet, dass** der Abschnitt der Gratebene (t) mit der Formschließrichtung (T) einen Winkel (a) zwischen 95° und 150° bildet.

11. Verfahren nach Anspruch 6, **dadurch gekennzeichnet, dass** während des Schritts des Sprühens der ersten Polymermischung (M), entlang zumindest eines Abschnitts des umlaufenden Rands (19) des Grundteils (12), der dazu bestimmt ist, die vorab festgelegten Bereiche der der Gratebene (t) zu definieren, ein größeres Ausgangsvolumen (Vi) der Polymermischung (M) durch das Bereitstellen eines die Mischung aufnehmenden Hohlraums (29) erhalten wird.

12. Verfahren nach Anspruch 11, **dadurch gekennzeichnet, dass** während des Schritts des Schließens der Form das Verdichten der Polymermischung (M), die innerhalb des die Mischung aufnehmenden Hohlraums (29) abgelagert wird, durch das Bereitstellen einer Ausbuchtung (31) in der zugewandten Bodenfläche (21) der Abdeckung (14) durchgeführt wird; wobei die Ausbuchtung (31) so ausgebildet ist, dass sie in den die Mischung aufnehmenden Hohlraum (29) eindringt.

13. Verfahren nach Anspruch 11, **dadurch gekennzeichnet, dass** zumindest der Abschnitt der Gratebene (t), der sich zwischen dem die Mischung aufnehmenden Hohlraum (29) und dem Eindruck (16) des Grundteils (12) befindet, zum Boden des Formhohlraums (22) hin geneigt ist.

## Revendications

1. Procédé pour la production d'une chaussure (1) au moyen d'injection directe, sur l'empeigne (2), d'une semelle (3) réalisée à partir d'un matériau polymère comprenant une semelle intermédiaire (5) et une semelle extérieure (4) qui recouvre une surface inférieure de la semelle intermédiaire (5) et qui, dans au moins l'une de ses zones, est en contact direct avec l'empeigne (2),
le procédé comprenant les étapes consistant à :
prévoir une cavité de moule (22) conçue pour recevoir la partie de chaussure (1) à recouvrir avec la semelle (3) et comprenant une base (12) ayant une empreinte (16) prévue pour former la surface externe de la semelle extérieure (4) ;
pulvériser un premier mélange de polymère (M) sur ladite empreinte (16) de la base (12) afin de former la semelle extérieure (4) ;
fermer la cavité de moule (22) autour de la chaussure (1) de sorte que la base (12) avec la semelle extérieure (4) préalablement pulvérisée, est positionnée par rapport à l'empeigne (2) avec l'espace pour la semelle intermédiaire (5) et avec ladite zone de la semelle extérieure (4) placée en contact direct avec l'empeigne (2) ;
injecter un second mélange de polymère (S) à l'intérieur de ladite cavité de moule (22) après la fermeture avec la base (12), afin de former la semelle intermédiaire (5) à l'intérieur dudit espace pour la semelle intermédiaire.

2. Procédé selon la revendication 1, **caractérisé en ce que** ladite au moins une zone de semelle extérieure (4) en contact direct avec l'empeigne (2) est une partie de pointe (P) de la chaussure (1).

3. Procédé selon la revendication 1, **caractérisé en ce que** le premier mélange de polymère (M) et/ou le second mélange de polymère (S) sont des mélanges de polyuréthane.

4. Procédé selon la revendication 1, **caractérisé en ce que** la cavité de moule (22) est formée par un moule (10) comprenant ladite base (12), deux anneaux latéraux (14), divisés le long d'un plan central longitudinal, et une forme de moule (15) et **en ce que**, afin de fermer la cavité de moule (22), les étapes suivantes sont réalisées :
rapprocher les deux anneaux latéraux (14) de sorte que lesdits anneaux latéraux (14) viennent en appui avec leur bord de fermeture (18) sur les côtés de l'empeigne (2) montée sur la forme de moule (15) ;
et après la pulvérisation du premier mélange de polymère (M), placer la base (12) avec son bord périmétral (19) qui délimite l'empreinte (16), contre une surface inférieure (21) des anneaux latéraux (14), afin d'obtenir la cavité de moule (22) avec ladite zone de la semelle extérieure (4) placée en contact direct avec l'empeigne (2).

5. Procédé selon la revendication 1, **caractérisé en ce que** la base (12) du moule (10) a un bord périmétral (19) qui délimite l'empreinte (16) et **en ce que** le premier mélange de polymère (M) est pulvérisé sur au moins une partie du bord périmétral (19) de la base (12) afin d'y déposer un volume initial (Vi) du premier mélange de polymère (M).

6. Procédé selon la revendication 5, **caractérisé en ce que**, pendant l'étape consistant à fermer la cavité de moule (22), le bord périmétral (19) de la base (12) est placé de manière adjacente à une surface inférieure (21) en vis-à-vis du couvercle (14), afin de définir un plan de bavure (t) et obtenir, lorsque la cavité de moule (22) est fermée, dans les zones prédétermines du plan de bavure (t), un volume définitif (Vf) de mélange de polymère (M), inférieur au volume initial (Vi) de mélange de polymère (M) déposé pendant l'étape de pulvérisation, afin de pousser au moins une partie du mélange de polymère (M) sur le plan de bavure (t) vers la cavité de moule (22).

7. Procédé selon la revendication 6, **caractérisé en ce que** lesdites zones prédéterminées du plan de bavure (t) sont à proximité d'une partie de l'empreinte (16) de la base (12) prévue pour former la partie de la semelle extérieure (4) placée en contact direct avec l'empeigne (2).

8. Procédé selon la revendication 6, **caractérisé en ce que** le rapprochement du bord périmétral (19) de la base (12) et de la surface inférieure en vis-à-vis (21) du couvercle (14) afin de définir le plan de bavure (t) a lieu le long d'une direction de fermeture de moule (T) ; ladite direction de fermeture de moule (T) étant la direction le long de laquelle la base (12) et le couvercle (14) sont poussés l'un vers l'autre.

9. Procédé selon la revendication 6, **caractérisé en ce qu'**au moins une partie du plan de bavure (t), dans lesdites zones prédéterminées, est inclinée vers le fond de la cavité de moule (22).

10. Procédé selon la revendication 9, **caractérisé en ce que** ladite partie du plan de bavure (t) forme avec la direction de fermeture de moule (T), un angle (a) compris entre 95° et 150°.

11. Procédé selon la revendication 6, **caractérisé en ce que**, pendant l'étape consistant à pulvériser le premier mélange de polymère (M), le long d'au moins une section du bord périmétral (19) de la base (12) prévue pour définir lesdites zones prédéterminées du plan de bavure (t), on obtient un plus grand volume initial (Vi) de mélange de polymère (M) au moyen de la fourniture d'une concavité de réception de mélange (29).

12. Procédé selon la revendication 11, **caractérisé en ce que**, pendant l'étape de fermeture de moule, la compression du mélange de polymère (M) déposé à l'intérieur de la concavité de réception de mélange (29), est réalisée au moyen de la fourniture d'une convexité (31) dans la surface inférieure en vis-à-vis (21) du couvercle (14) ; ladite convexité (31) étant conçue pour pénétrer dans la concavité de réception de mélange (29).

13. Procédé selon la revendication 11, **caractérisé en ce qu'**au moins la partie du plan de bavure (t) située entre la concavité de réception de mélange (29) et l'empreinte (16) de la base (12) est inclinée vers le fond de la cavité de moule (22).
